# EUROPEAN PATENT SPECIFICATION

(11) **EP 1 864 525 B1**
(45) Date of publication and mention of the grant of the patent: **01.01.2014**
(21) Application number: 06710370.5
(22) Date of filing: 13.02.2006
(51) Int. Cl.: H04W 48/16, H04W 8/18, H04W 88/02

(54) **METHOD, DEVICE AND SYSTEM FOR MANAGING A CACHE OF NETWORK CACHES IN A MOBILE**
VERFAHREN, EINRICHTUNG UND SYSTEM ZUR VERWALTUNG EINES CACHES VON NETZWERK-CACHES IN EINER MOBILEN EINRICHTUNG
PROCEDE, DISPOSITIF ET SYSTEME POUR LA GESTION DE CACHE DE CACHES DE RESEAU DANS UN DISPOSITIF MOBILE

(30) Priority: 30.03.2005 US 96222
(43) Date of publication of application: 12.12.2007
(73) Proprietor: Nokia Solutions and Networks Oy, 02610 Espoo (FI)
(72) Inventor: REYNOLDS, Franklin, Bedford, MA 01730 (US); YE, Yinghua, Mountain View, CA 94040 (US); WISNER, Paul, Arlington, MA 02474 (US)
(86) International application number: PCT/IB2006/000282
(87) International publication number: WO 2006/103499

(56) References cited:
- EP-A2- 1 085 776
- WO-A1-03/092313
- WO-A1-2006/013454
- WO-A1-2006/054219
- US-A1- 2001 023 446
- US-A1- 2004 203 684
- US-A1- 2004 203 684
- US-B1- 6 223 042
- LIANGZHONG YIN ET AL: "A generalized target-driven cache replacement policy for mobile environments ~", APPLICATIONS AND THE INTERNET, 2003. PROCEEDINGS. 2003 SYMPOSIUM ON 27-31 JAN. 2003, PISCATAWAY, NJ, USA,IEEE, 27 January 2003 (2003-01-27), pages 14-21, XP010628983, ISBN: 978-0-7695-1872-5
- LIANGZHONG YIN ET AL.: 'A Generalized Target-Driven Cache Replacement Policy for Mobile Environments' THE INTERNATIONAL SYMPOSIUM ON APPLICATIONS AND THE INTERNET (SAINT) January 2003, pages 14 - 21, XP010628983

## Description

### FIELD OF THE INVENTION

The present invention relates to the field of managing a cache of a portable device in a data communication environment, in particularly in a wireless data communication system, in an efficient manner. Further, a portable device adapted to process said method is provided and a system comprising a plurality of networks and at least one portable device are also provided.

### BACKGROUND OF THE INVENTION

Mobile and wireless computing has evolved beyond the ability to wirelessly connect users to read and browse the web anywhere and anytime. Current trends involve exploiting local services, peers and services in local and foreign networks with unknown infrastructures. For example a mobile or portable device should be able to use a printer in a new network or a PDA should be able to use a faster web cache service available in a new network. With the advent of location-based services and peer-to-peer computing, service discovery may become a crucial part of middleware for an anywhere and anytime computing model adopted by mobile and pervasive computing networks.

As the computing trends in wireless and mobile networks move more towards distributed computing, acquiring knowledge about available services poses great challenges due to the mobility of devices and the dynamic nature of the environment.

Service discovery may generally be defined as the process of discovering the network location of software entities/agents that can provide access to network resources such as devices, data, and services. There are a number of service discovery protocols that are intended for local or personal area networks, i.e. SDP within Bluetooth, Sun's Java RMI based JINI, Microsoft's SSDP, as well as IETF's standardized SLP.

Universal Plug and Play (UPnP) is a framework for building and deploying distributed applications in local area networks. UPnP protocols: SOAP, GENA and SSDP, are layered on top of HTTP and the Transmission Control Protocol/Unreliable Datagram Protocol/Internet Protocol (TCP/CTDP/IP) network protocol suite. By providing a set of defined network protocols, UPnP allows devices to build their own APIs that implement these protocols in whatever language or platform they choose. The Simple Service Discovery Protocol (SSDP) enables devices to announce their presence to the network as well as discover other available devices and services. SSDP uses the UDP to send unicast and multicast queries. Once a device or service has been discovered, the HyperText Transfer Protocol (HTTP) is used to retrieve the complete device and service descriptions.

Local networks are often private, or the public connectivity is in someway limited (perhaps by a firewall or other security mechanisms). When a portable device visits such a local network (using Bluetooth, 802.11, UWB or other short range network technology) the previous network state, such as the IP address of the mobile host, ARP table, service discovery cache, HTTP cache, etc, must be discarded and reset. This is not particularly difficult, but it does take time. Replenishing the service discovery cache can be particularly time consuming. If the mobile terminal re-visits a local network, it would be useful to preserve and reuse the previous network state, especially the service discovery cache.

Various caching strategies may be applied to distinguish useful service records from service records that have become stale. Replacement algorithms can take into account various properties, such as age, availability, and storage address of the cached data.

Document WO 03/092313 A1 relates to a method involving searching for an available frequency in the order of a search frequency list. The search frequency list includes count values indicating the frequency of usage of the corresponding search frequency.

Document EP 1085776 A2 discloses a cell detection and automatic storage processing, where the number of times the user visits a given cell within a timeout period is counted.

### SUMMARY OF THE INVENTION

The object of the present invention is to provide a methodology, a device, and a system for managing a cache of a portable device, wherein said cache is being used for storing network related data content, which overcomes the deficiencies of the state of the art.

The objects of the present invention are solved by the subject matter defined in the accompanying independent claims.

According to a first aspect of the present invention, a method for managing a cache of a portable device is provided. Said cache is being used for storing multiple network caches. Each network cache contains data associated with a specific network. In a first operation a detecting of an existence of at least one active network out of a plurality of networks is provided, wherein said portable device is allowed to communicate with said at least one active network. Next, a determining of a network identity of said at least one active network follows. Finally, an updating of said network related data content on the basis of said network identity is done and afterwards storing of said updated network related data content in said cache is performed if said network identity is unknown to said portable device. Otherwise, i.e. if said network identity is known to said portable device due to previous usage for instance, a visitation counter associated with said network identity is incremented in particular by one. The visitation counter is comprised by said network related data content.

According to an embodiment of the present invention, connecting to said at least one active network is provided by using said stored network related data content by said portable device. Thus, the device is able to connect faster to an active network, because it may use data which is already available in the network cache. Hence, processes like handshaking or inquiry procedures between device and active network are avoided. The term network cache describes the set of cached network data which is associated with a certain network. The set of cached network data may be managed according to various network protocol rules and also by means of the method in accordance with the present invention. The cache of network caches comprises several entries and each entry corresponds to a network cache.

According to another embodiment of the present invention, said updating is based on a replacement algorithm in particular on a Least Frequently Used (LFU) replacement algorithm. According to yet another embodiment of the present invention, each time said portable device connects to a certain network (i.e. the at least one active network for instance) out of said plurality of networks said visitation counter associated with said certain network is incremented, especially in case the network has been already visited previous in time. When a new network cache must be added to the cache of caches and there is insufficient space, the least frequently used network cache is replaced with the new network cache.

The "least frequently used" (LFU) algorithm in accordance with the present invention is different from the "least recently used" algorithm. The LFU algorithm counts (and ages) the number of times a mobile terminal connects to a network - not the number of packets sent via the network. This means that the network cache entry visitation counter will only be incremented by one when the associated network is visited, even if the visited network is used for several hours.

According to another embodiment of the present invention, the LFU algorithm may be enhanced using a sliding visitation window. A visitation window is the number of times a network has been visited during a pre-defined period of time. The length of a period can be configured. A fixed number of visitation windows are associated with each network identity. The number of visitation windows can also be configured. Each time a mobile terminal attaches to a network, the visitation count of the current window associated with that network is incremented. The current visitation count of a network is the sum of all the visits in all of its visitation windows. When the current period ends, the oldest period is deleted.

According to another embodiment of the present invention, an alternative to sliding windows is to maintain a list of every visit to every network in the network cache. When a new network cache needs to replace an old network cache, the list of visits is used to identify the least frequently visited network. When the least frequently used network cache is evicted from the cache of caches, then all of its visitations are also evicted.

According to another embodiment of the present invention, said visitation counter is incremented until a certain threshold is reached. Once the threshold has been reached the counter is no longer incremented.

According to another embodiment of the present invention, said determining of said network identity is performed by using of information from a DHCP server. The DHCP server delivers information such as the address of the network's IP gateway or if there is no gateway, the IP address of the DHCP server itself that can be used to identify the network cache.

According to another embodiment of the present invention, said determining of said network identity is performed by using of information corresponding to an IP router's MAC address or if no router is available, the MAC address of a Network Access Point (NAP) obtained using standard protocols other than DHCP. Thus, an additional alternative for determining the network identity and location, respectively, is provided. The network identity may be obtained even if a DHCP service is deactivated.

According to another embodiment of the present invention, said network related data is stored in the cache according to said network identity of a network. Hence, a CPU is able to correctly control the cache, comprising network related data, on the basis of the network identity.

According to another aspect of the present invention, a computer program product is provided, which comprises program code sections stored on a machine-readable medium for carrying out the operations of the method according to any aforementioned embodiment of the invention, when the computer program product is run on a processor-based device, a computer, a terminal, a network device, a mobile terminal, or a mobile communication enabled terminal.

According to another aspect of the present invention, a computer program product is provided, comprising program code sections stored on a machine-readable medium for carrying out the operations of the aforementioned method according to an embodiment of the present invention, when the computer program product is run on a processor-based device, a computer, a terminal, a network device, a mobile terminal, or a mobile communication enabled terminal.

In particular, the operations comprises a detecting of an existence of at least one active network out of a plurality of networks is provided, wherein said portable device is allowed to communicate with said at least one active network. In a next operation, a determining of a network identity of said at least one active network follows. Finally, an updating of said network related data content on the basis of said network identity is done and afterwards storing of said updated network related data content in said cache is performed if said network identity is unknown to said portable device. Otherwise, i.e. if said network identity is known to said portable device due to previous usage for instance, a visitation counter associated with said network identity is incremented in particular by one. The visitation counter is comprised by said network related data content.

According to another aspect of the present invention, a module for managing a cache of a portable device is provided. Cache is being used for storing multiple network caches. Each network cache contains data associated with a specific network. The module is adapted for detecting of an existence of at least one active network out of a plurality of networks is provided, wherein said portable device is allowed to communicate with said at least one active network. Next, the module is adapted for determining of a network identity of said at least one active network. Finally, the module is adapted for updating of said network related data content on the basis of said network identity is done and afterwards storing of said updated network related data content in said cache is performed if said network identity is unknown to said portable device. Otherwise, i.e. if said network identity is known to said portable device due to previous usage for instance, the module is adapted for incrementing a visitation counter associated with said network identity in particular by one. The visitation counter is comprised by said network related data content.

According to an embodiment, the module is adequately adapted to perform any of the aforementioned operations according to an embodiment of the present invention.

According to another aspect of the present invention, a computer data signal embodied in a carrier wave and representing instructions is provided which when executed by a processor causes the operations of the method according to an aforementioned embodiment of the invention to be carried out.

According to yet another aspect of the present invention, a portable device adapted for managing a cache of a portable device is provided, wherein said cache is being used for storing network related data content. The portable device comprises a cache for caching network related data content, a detector for detecting an existence of at least one active network out of a plurality of networks, wherein said portable device is allowed to communicate with said at least one active network, a connector to connect said at least one active network, a component for determining a network identity of said at least one active network and a component for obtaining data from said at least one active network.

Further said portable device includes a central processing unit (CPU) being connected to said detector, said connector, said component for determining, said cache and said component for obtaining, wherein said CPU is adapted to update said network related data content on the basis of said obtained data and subsequently storing of said network related data content in said cache if said network identity is unknown to said portable device. Otherwise, i.e. if said network identity is known to said portable device due to previous usage for instance, the CPU is adapted to increment a visitation counter associated with said network identity in particular by one. The visitation counter is comprised by said network related data content.

According to yet another embodiment of the present invention, said device further comprises a wireless data interface adapted for data communication with said at least one network. Thus a wireless communication with different entities or networks may be carried out.

According to yet another embodiment of the present invention, said device further comprises a memory module adapted to store data. Thus, an additional storing component is available and a possibility for multiple storing of the cache data is given.

According to yet another aspect of the present invention, a communication system comprising a plurality of networks and at least one portable device is provided. Said portable device is adapted for data communication with said plurality of networks.

According to yet another embodiment of the present invention, said data communication uses a Bluetooth interface. Thus, a communication on a Bluetooth channel is enabled.

According to yet another embodiment of the present invention, said data communication uses a UWB interface. Thus, a communication on a UWB channel is enabled.

According to yet another embodiment of the present invention, said data communication uses a WLAN interface. Thus, a communication on a WLAN channel is enabled.

Advantages of the present invention will become apparent to the reader of the present invention when reading the detailed description referring to embodiments of the present invention, based on which the inventive concept is easily understandable.

Throughout the detailed description and the accompanying drawings same or similar components, units, or devices will be referenced by same reference numerals for clarity purposes.

It shall be noted that the designations portable device and mobile device are used synonymously throughout the description.

### SHORT DESCRIPTION OF THE DRAWINGS

The accompanying drawings are included to provide a further understanding of the invention, and are incorporated in and constitute a part of this specification. The drawings illustrate embodiments of the present invention and together with the description serve to explain the principles of the invention. In the drawings,
- Fig. 1: shows a flow chart illustrating the cache management method in accordance with the present invention;
- Fig. 2: exactly depicts the determining of the network identity which communicates with the portable device in accordance with the invention;
- Fig. 3: is a flow chart illustrating the cache updating/refreshing operation in accordance with the present invention;
- Fig. 4: depicts a portable device in accordance with the present invention;

Even though the invention is described above with reference to embodiments according to the accompanying drawings, it is clear that the invention is not restricted thereto but it can be modified in several ways within the scope of the appended claims.

### DETAILED DESCRIPTION OF THE DRAWINGS

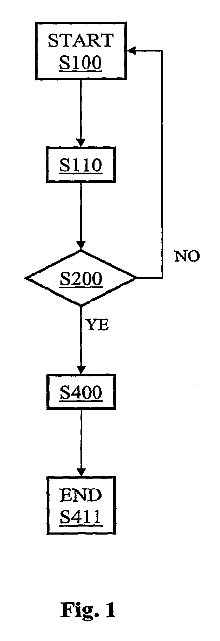

With reference to fig 1, a flow chart illustrating the principle of managing a cache of network caches of a portable device is depicted. The portable device is traveling through an area wherein a plurality of active networks is located. Said portable device is adapted to connect to an active network by means of a wireless data interface, but also a wired communication is imaginable within the scope of the present invention.

The main idea is for a mobile terminal or portable device, respectively to contain a list or a cache of network caches. Each network cache is associated with a network the user has visited in the past. The contents of a network cache are populated by the protocols that operate while a terminal is connected to a particular network. These protocols include, but are not limited to: ARP, RARP, DHCP, AUTO-IP, HTTP, SLP, LDAP, and SSDP. Said protocols are needed for a proper communication between the device and other devices and services on the active network.

Each portable device in which the method in accordance with the present invention is executed comprises a cache memory or cache and among others a central processing unit (CPU). The CPU is adapted to mainly control all device operation. The cache used for network caches is a "meta-cache" and a meta-cache replacement algorithm is used to control the contents of the meta-cache.

Caching of distributed state on a per network basis may be useful for many applications, but it should be of particular use for protocols such as service discovery protocols that use caches to improve performance and do not require strong accuracy guarantees. Protocols such as UPnP's SSDP may need to transfer large files in order to discover what devices and services are available on a local network. The ability to cache the SSDP descriptions of previously discovered devices and services may greatly improve its performance and responsiveness. In the present exemplary embodiment of the invention, SSDP may be used to populate each network cache of said portable device. Other protocols are usable as well within the scope of the present invention.

Usually, network or discovery caches are intended to improve performance. The proposed cache of network caches may trade memory for speed - the speed improvement is most likely to occur when a mobile user revisits a network and reuses the previously cached network data already stored in the portable device.

In an operation S100, the operational sequence starts. In accordance with the aforementioned description of the inventive concept, a detecting of an active network is provided in an operation S110. This means that a portable device, for instance detects an active network in its environment and a low level transmission of data starts, which allows the portable device to detect the nature, type etc. of the present network.

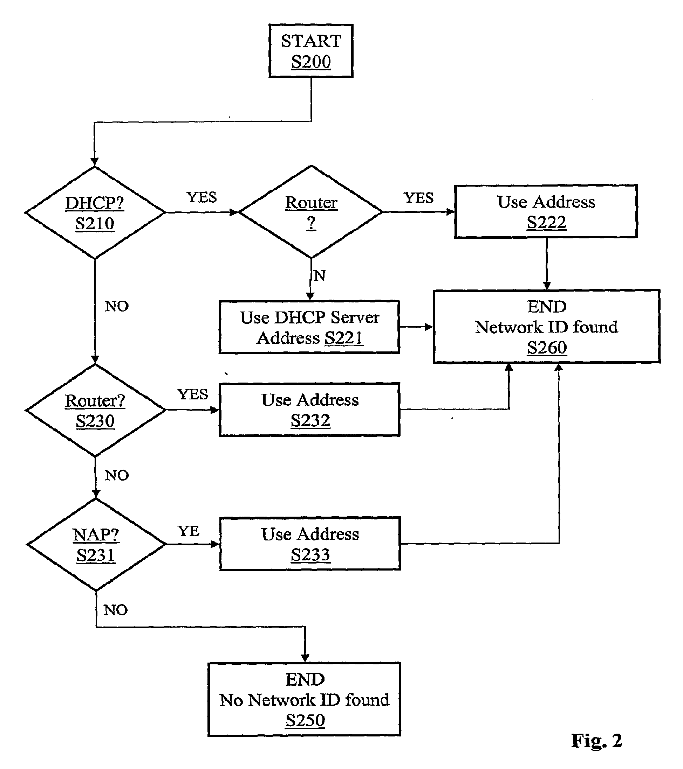

In the next operation S200, the network identity of at least one detected and active network is provided. The operation of determining the network identity is exactly described in the flowchart with reference to fig. 2. If no network identity is determined, corresponding to the NO branch of the operation S200, the operational sequence may be restarted or alternatively an error handling mechanism may be started, for instance. If a network identity is detected, according to the YES branch, a following operation S400 will be provided. Said operation S400 provides the updating and activation of a network cache in the portable device.

If no further processing is carried out the method comes to an end at operation S411 and may be restarted in an operation S 100 which corresponds to a new iteration operation.

Fig. 2 is a flow chart of a network identity determining algorithm. After a portable device detects an active network, it is necessary to determine its network identity.

In an operation S200 the operational sequence starts.

First, the portable device attempts to contact a DHCP server using the standard DHCP discover protocol which is represented by the conditional operation S210.

If a DHCP server is available, corresponding to the YES branch of the conditional operation S210, then it is asked for the address of its default router. If a default router is available, YES branch of operation S220, its address is used as the network identity for this network as shown in the operational step S222. If no default router is available, corresponding to the NO branch of the operation S220, then the address of the DHCP server is used as the network identity, with reference to the operation S221.

After the operations S221 or S222 were processed the operational sequence comes to an end in an operation S260.

If there is NO DHCP server available which is depicted with reference to the NO branch of said operation S210, then an attempt is made to find a router using the standard IPv4 and IPv6 router discovery protocols, S230. If a router is found, YES branch of the conditional operation S230, then its address for the Network Identity may be used. Said use is depicted with reference to an operation S232.

If NO router is found corresponding to the NO branch of the operation S230, then the portable device should determine if it is connected to the currently active network via a NAP (Network Access Point), as shown in an operation S231. If a NAP exists, according to the YES branch of operation S231, its MAC address should be used as the Network Identity, S233.

If no NAP can be found as shown with reference to the NO branch of the conditional operation S231, then the portable device cannot determine the network identity of the currently active network and the process terminates in an operation S250.

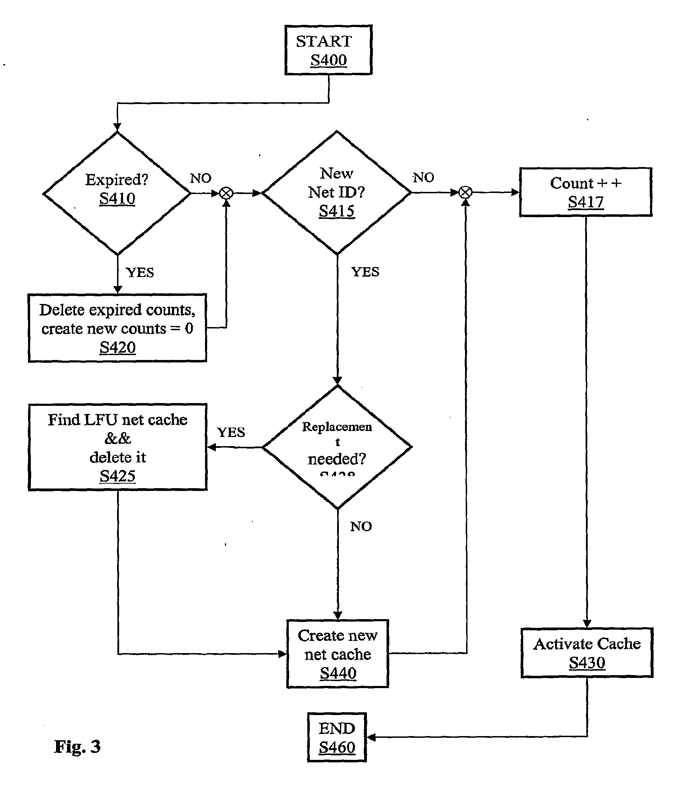

With reference to fig. 3 the principle of an algorithm for managing the cache of network caches, in accordance with the present invention, is shown.

Though many replacement algorithms are possible, in accordance with the present invention a "least frequently used" replacement algorithm with sliding windows is introduced. A visitation window is the number of times a network has been visited during a certain period of time. Once a network cache has been activated (whether a new network cache is created or a previous cache is reused), network protocols such as SSDP, ARP and HTTP can use and modify it.

The operational sequence is started in an operation S400. When a portable device connects to a network, after it successfully determines the network's identity, it checks if the current window period has elapsed corresponding to an operation S410. If the period has elapsed, all visitation counts associated with that window are deleted which is represented by the operation S420 in accordance with the YES branch of S410. Thereby a new visitation count is created for each network cache and it is set to zero corresponding to an initialization step.

After the window period has been checked, then the network identity of the newly visited network is compared to the cached identities in the cache of network caches. This is depicted with reference to the conditional operation S415.

If the currently visited network identity is not new, i.e., it matches the network identity of a network already in the cache of network caches, then the No branch of S415 is selected and operation S417 follows. If, the currently visited network identity is new, i.e., it does not match the network identity of a network already in the cache of network caches, then the YES branch of S415 is taken and the conditional operation S428 follows. If there is enough space for a new network cache, then no replacement is needed and the NO branch is selected and the new network cache is created, S440. The newly created network cache is then selected for further processing. If there is not enough memory space, the YES branch will be selected and a network cache will have to be chosen so that it can be deleted to make space for the new network cache, S425.

With reference to the YES branch of the conditional operation S428 the (LFU) network cache replacement algorithm in accordance with the present invention is provided. Each network cache has a list of visitation counts, one per visitation period, associated with it. The number of times a network has been visited is calculated by totaling all the visitation counts of all the periods associated with that network cache. The network cache with the smallest number of visits is deleted, S425, a new network cache is created, S440, and the newly created network cache is selected for further processing.

The visitation count of the selected network is incremented and its cache is activated, as shown in operations S417 and S430, respectively. Once the network cache is activated it can be used by other protocols such as SSDP, ARP, and HTTP.

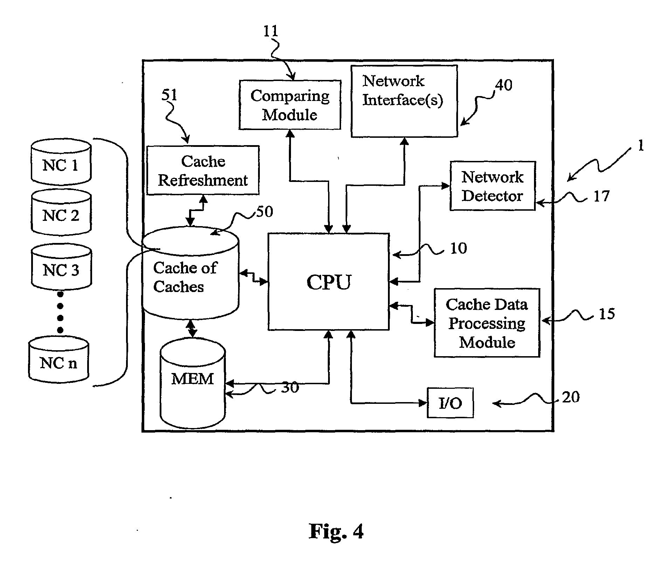

With reference to fig. 4, the portable device 1 shall be realized on the basis of a processor-based electronic device which comprises typically a CPU 10, Input/Output unit 20, and storage component 30. As the portable device 1 is adapted for wireless communication issues it comprises one or more network interfaces which are controlled by the CPU 10 too.

The network interface(s) and transceiver 40, respectively, may be operated on the basis of any available or future technology / standard for wireless data communications. In particular, the transceiver 40 may operate on the basis of electromagnetic technology, which allows emitting radio frequency signals and detecting such radio frequency signals, which carry data to be exchanged between at least two transceivers. More particular, the network interface 40 may use a local data communications interface such as a Bluetooth data interface, a wireless local area network (WLAN) interface, a near-field communication (NFC) interface, a wireless local loop (WLL) interface, ultra-wide band (UWB) interface, any other interface operable with IEEE 802.xx standards, a digital enhanced cordless telephone (DECT) interface or any similar/related communications standard allowing wireless data communications. Additionally, network interface 40 may operate based on an infrared-based data interface such as defined by the infrared data access (IrDA) standard. Moreover, the transceiver 40 may be also realized by means of a cellular interface according to the GSM (global system for mobile communications) standard, the UMTS (universal mobile telecommunication services) standard, the PCS (personal communication system) standard, IS-95 standard, IS-139 standard, IS-2000 standard or any other available/future standard for cellular communications.

The memory unit 30 may be connected to the cache 50 to secure a reliable data storage on both modules. The cache comprises contents relating each network visited by the mobile device 1. For each previously visited network the cache 50 stores the network data in the modules NC 1 to NC n, wherein n is a limited value defining the number of already visited networks. As aforementioned, the memory space in the cache 50 is limited, thus a cache refreshment module 51 is needed to ensure the consistency of the content within cache block 50. The cache refreshment module 51 may be directly connected with the CPU or further a clock to ensure a synchronous refreshment of the cache content. The comparing module 11 may be used for analyzing the cache content and also for determining if received network data is already stored in the cache memory. A cache data processing module 15 which provides the operations of the methods described above. The data processing module interconnects via the CPU 10 with the cache 50 and the cache refreshment module 51 as well and provides information about the network data or similar.

The network interface 40 communicates with at least one active network via an antenna 66 and it delivers network related data to the CPU ant consequently to the network detector 17. The network detector is used for identifying the actual network and it may provide the CPU 10 and network interface with information that is necessary for proper communication.

Even though the invention is described above with reference to embodiments according to the accompanying drawings, it is clear that the invention is not restricted thereto but it can be modified in several ways within the scope of the appended claims.

## Claims

1. A method for managing a cache (50) of a portable device (1), wherein said cache (50) is being used for storing network related data content, comprising the operations of:
during traveling of said portable device (1) through an area penetrated by a plurality of active networks, detecting (S110) an existence of at last one active network out of said plurality of networks, wherein said portable device (1) is allowed to communicate with said at least one active network;
determining a network identity of said at least one active network;
updating said network related data content on the basis of said network identity and storing at least part of said updated network related data content in said cache if said network identity is unknown to said portable device (1); and
incrementing a visitation counter associated with said network identity if said network identity is known to said portable device (1);
**characterized in that**
a configurable number of visitation windows associated with each network identity is provided, wherein a visitation window is the number of times a network has been visited during a configurable period of time, and wherein said incrementing of said visitation counter associated with said network identity comprises:
incrementing the number of visits in the current visitation window associated with said network identity, wherein the visitation counter associated with said network identity is the sum of all visits in all of its associated visitation windows;
and by
deleting the number of visits of the oldest of said visitation windows if the current visitation window ends.

2. The method according to claim 1, wherein said updating is based on a replacement algorithm.

3. The method according to claim 1, wherein each time said portable device (1) connects to a certain network out of said plurality of networks said visitation counter associated with said certain network is incremented if said certain network was previously visited.

4. The method according to claim 1, wherein said determining of said network identity is performed by using of information from a DHCP server.

5. The method according to claim 1, wherein said determining of said network identity is performed by using of information corresponding to a Network Access Point MAC address.

6. The method according to claim 1, wherein said network related data is stored in the cache according to said network identity of a network.

7. A computer program product, comprising program code sections stored on a machine-readable medium for carrying out operations, when said product is run on a processor-based device, a terminal device, a network device, a portable terminal, a consumer electronic device, or a mobile communication enabled terminal, wherein said operations comprises:
during traveling of said portable device (1) through an area penetrated by a plurality of active networks, detecting an existence of at least one active network out of said plurality of networks, wherein said portable device (1) is allowed to communicate with said at least one active network; determining a network identity of said at least one active network;
updating said network related data content on the basis of said network identity and storing at least part of said updated network related data content in said cache if said network identity is unknown to said portable device (1); and incrementing a visitation counter associated with said network if said network identity is known to said portable device (1);
**characterized in that**
a configurable number of visitation windows associated with each network identity is provided, wherein a visitation window is the number of times a network has been visited during a configurable period of time, and wherein said incrementing of said visitation counter associated with said network identity comprises:
incrementing the number of visits in the current visitation window associated with said network identity, wherein the visitation counter associated with said network identity is the sum of all visits in all of its associated visitation windows;
and by deleting the number of visits of the oldest of said visitation windows if the current visitation window ends.

8. The computer program product according to claim 7, wherein said updating is based on a replacement algorithm.

9. The computer program product according to claim 7, wherein each time said portable device (1) connects to a certain network out of said plurality of networks said visitation counter associated with said certain network is incremented if said certain network was previously visited.

10. The computer program product according to claim 7, wherein said determining of said network identity is performed by using of information corresponding to a router MAC address.

11. The computer program product according to claim 7, wherein said network related data is stored in the cache according to said network identity of a network.

12. A module for managing a cache of a portable device (1), wherein said cache is being used for storing network related data content, said module adapted for
during traveling of said portable device (1) through an area penetrated by a plurality of active networks, detecting an existence of at least one active network out of said plurality of networks wherein said portable device (1) is allowed to communicate with said at least one active network;
determining a network identity of said at least one active network;
updating said network related data content on the basis of said network identity and storing at least part of said updated network related data content in said cache if said network identity is unknown to said portable device (1); and incrementing a visitation counter associated with said network if said network identity is known to said portable device (1);
**characterized in that**
a configurable number of visitation windows associated with each network identity is provided, wherein a visitation window is the number of times a network has been visited during a configurable period of time, and wherein said incrementing of said visitation counter associated with said network identity comprises:
incrementing the number of visits in the current visitation window associated with said network identity, wherein the visitation counter associated with said network identity is the sum of all visits in all of its associated visitation windows;
and by
deleting the number of visits of the oldest of said visitation windows if the current visitation window ends.

13. The module according to claim 12, wherein said updating is based on a replacement algorithm.

14. The module according to claim 12, wherein said determining of said network identity is performed by using of information from a DHCP server.

15. The module according to claim 12, wherein said network related data is stored in the cache according to said network identity of a network.

16. A portable device (1) adapted for managing a cache (50) of said portable device (1), wherein said cache is being used for storing network related data content, said device comprising:
a cache (50) for caching network related data content;
a detector (17) for detecting an existence of at least one active network out of a plurality of active networks, wherein said detector is operated during traveling of said portable device (1) through an area penetrated by said plurality of active networks, wherein said portable device (1) is allowed to communicate with said at least one active network;
a connector (40, 66) to connect said at least one active network;
a component for determining a network identity of said at least one active network;
a component for obtaining data from said at least one active network;
a central processing unit, CPU, (10) being operatively connected to said detector (17), said connector (40, 66), said component for determining, said cache (50) and said component for obtaining and a module (15) according to anyone of claims 12-15.

17. The portable device (1) according to claim 16, wherein said device (1) further comprises a wireless data interface adapted for data communication with said at least one network.

18. The portable device (1) according to claim 16, wherein said device (1) further comprises a memory module (30) adapted to store data.

19. A communication system comprising at least one network and at least one portable device (1) according to anyone of claims 16-18, wherein said portable device (1) is adapted for data communication with said at least one network.

20. The communication system according to claim 19, wherein said data communication uses at least one of the group of Bluetooth interface, UWB interface, WLAN interface and LAN interface.

## Patentansprüche

1. Verfahren zum Verwalten eines Cachespeichers (50) einer tragbaren Vorrichtung (1), wobei der Cachespeicher (50) zum Speichern eines netzwerkbezogenen Dateninhalts verwendet wird, das die folgenden Operationen aufweist:
während einer Bewegung der tragbaren Vorrichtung (1) durch einen Bereich, der durch mehrere aktive Netzwerke durchsetzt ist, Ermitteln (S110) eines Vorhandenseins von mindestens einem aktiven Netzwerk aus den mehreren Netzwerken, wobei es ermöglicht wird, dass die tragbare Vorrichtung (1) mit dem mindestens einen aktiven Netzwerk kommuniziert;
Feststellen einer Netzwerkidentität des mindestens einen aktiven Netzwerks;
Aktualisieren des netzwerkbezogenen Dateninhalts auf der Grundlage der Netzwerkidentität und Speichern mindestens eines Teils des aktualisierten netzwerkbezogenen Dateninhalts im Cachespeicher, wenn die Netzwerkidentität der tragbaren Vorrichtung (1) unbekannt ist; und
Inkrementieren eines Besuchszählers, der mit der Netzwerkidentität verbunden ist, wenn die Netzwerkidentität der tragbaren Vorrichtung (1) bekannt ist;
**dadurch gekennzeichnet, dass**
eine konfigurierbare Anzahl von Besuchsfenstern, die mit jeder Netzwerkidentität verbunden sind, vorgesehen ist, wobei ein Besuchsfenster die Anzahl der Male ist, mit der ein Netzwerk während einer konfigurierbaren Zeitspanne besucht worden ist, und wobei das Inkrementieren des Besuchszählers, der mit der Netzwerkidentität verbunden ist, aufweist:
Inkrementieren der Anzahl der Besuche im gegenwärtigen Besuchsfenster, das mit der Netzwerkidentität verbunden ist, wobei der Besuchszähler, der mit der Netzwerkidentität verbunden ist, die Summe aller Besuche in allen seinen verbundenen Besuchsfenstern ist;
und durch
Löschen der Anzahl der Besuche des ältesten der Besuchsfenster, wenn das gegenwärtige Besuchsfenster endet.

2. Verfahren nach Anspruch 1, wobei das Aktualisieren auf einem Ersetzungsalgorithmus beruht.

3. Verfahren nach Anspruch 1, wobei jedes Mal, wenn sich die tragbare Vorrichtung (1) mit einem bestimmten Netzwerk aus den mehreren Netzwerken verbindet, der mit dem bestimmten Netzwerk verbundene Besuchszähler inkrementiert wird, wenn das bestimmte Netzwerk vorher besucht wurde.

4. Verfahren nach Anspruch 1, wobei das Feststellen der Netzwerkidentität durch die Verwendung von Informationen aus einem DHCP-Server durchgeführt wird.

5. Verfahren nach Anspruch 1, wobei das Feststellen der Netzwerkidentität durch die Verwendung von Informationen durchgeführt wird, die der MAC-Adresse eines Network Access Point entsprechen.

6. Verfahren nach Anspruch 1, wobei die netzwerkbezogenen Daten im Cachespeicher gemäß der Netzwerkidentität eines Netzwerks gespeichert werden.

7. Computerprogrammprodukt, das Programmcodeabschnitte, die auf einem maschinenlesbaren Medium gespeichert sind, zum Ausführen von Operationen aufweist, wenn das Produkt auf einer prozessorbasierten Vorrichtung, einer Endgerätevorrichtung, einer Netzwerkvorrichtung, einem tragbaren Endgerät, einer Unterhaltungselektronikvorrichtung oder einem zur mobilen Kommunikation fähigen Endgerät ausgeführt wird, wobei die Operationen Folgendes aufweisen:
während einer Bewegung der tragbaren Vorrichtung (1) durch einen Bereich, der durch mehrere aktive Netzwerke durchsetzt ist, Ermitteln eines Vorhandenseins von mindestens einem aktiven Netzwerk aus den mehreren Netzwerken, wobei es ermöglicht wird, dass die tragbare Vorrichtung (1) mit dem mindestens einen aktiven Netzwerk kommuniziert; Feststellen einer Netzwerkidentität des mindestens einen aktiven Netzwerks;
Aktualisieren des netzwerkbezogenen Dateninhalts auf der Grundlage der Netzwerkidentität und Speichern mindestens eines Teils des aktualisierten netzwerkbezogenen Dateninhalts im Cachespeicher, wenn die Netzwerkidentität der tragbaren Vorrichtung (1) unbekannt ist; und
Inkrementieren eines Besuchszählers, der mit dem Netzwerk verbunden ist, wenn die Netzwerkidentität der tragbaren Vorrichtung (1) bekannt ist;
**dadurch gekennzeichnet, dass**
eine konfigurierbare Anzahl von Besuchsfenstern, die mit jeder Netzwerkidentität verbunden sind, vorgesehen ist, wobei ein Besuchsfenster die Anzahl der Male ist, mit der ein Netzwerk während einer konfigurierbaren Zeitspanne besucht worden ist, und wobei das Inkrementieren des Besuchszählers, der mit der Netzwerkidentität verbunden ist, aufweist:
Inkrementieren der Anzahl der Besuche im gegenwärtigen Besuchsfenster, das mit der Netzwerkidentität verbunden ist, wobei der Besuchszähler, der mit der Netzwerkidentität verbunden ist, die Summe aller Besuche in allen seinen verbundenen Besuchsfenstern ist;
und durch Löschen der Anzahl der Besuche des ältesten der Besuchsfenster, wenn das gegenwärtige Besuchsfenster endet.

8. Computerprogrammprodukt nach Anspruch 7, wobei das Aktualisieren auf einem Ersetzungsalgorithmus beruht.

9. Computerprogrammprodukt nach Anspruch 7, wobei jedes Mal, wenn sich die tragbare Vorrichtung (1) mit einem bestimmten Netzwerk aus den mehreren Netzwerken verbindet, der mit dem bestimmten Netzwerk verbundene Besuchszähler inkrementiert wird, wenn das bestimmte Netzwerk vorher besucht wurde.

10. Computerprogrammprodukt nach Anspruch 7, wobei das Feststellen der Netzwerkidentität durch die Verwendung von Informationen durchgeführt wird, die einer MAC-Adresse eines Routers entsprechen.

11. Computerprogrammprodukt nach Anspruch 7, wobei die netzwerkbezogenen Daten im Cachespeicher gemäß der Netzwerkidentität eines Netzwerks gespeichert werden.

12. Modul zur Verwaltung eines Cachespeichers einer tragbaren Vorrichtung (1), wobei der Cachespeicher zum Speichern eines netzwerkbezogenen Dateninhalts verwendet wird, wobei das Modul für Folgendes eingerichtet ist:
während einer Bewegung der tragbaren Vorrichtung (1) durch einen Bereich, der durch mehrere aktive Netzwerke durchsetzt ist, Ermitteln eines Vorhandenseins von mindestens einem aktiven Netzwerk aus den mehreren Netzwerken, wobei es ermöglicht wird, dass die tragbare Vorrichtung (1) mit dem mindestens einen aktiven Netzwerk kommuniziert;
Feststellen einer Netzwerkidentität des mindestens einen aktiven Netzwerks;
Aktualisieren des netzwerkbezogenen Dateninhalts auf der Grundlage der Netzwerkidentität und Speichern mindestens eines Teils des aktualisierten netzwerkbezogenen Dateninhalts im Cachespeicher, wenn die Netzwerkidentität der tragbaren Vorrichtung (1) unbekannt ist; und Inkrementieren eines Besuchszählers, der mit dem Netzwerk verbunden ist, wenn die Netzwerkidentität der tragbaren Vorrichtung (1) bekannt ist;
**dadurch gekennzeichnet, dass**
eine konfigurierbare Anzahl von Besuchsfenstern, die mit jeder Netzwerkidentität verbunden sind, vorgesehen ist, wobei ein Besuchsfenster die Anzahl der Male ist, mit der ein Netzwerk während einer konfigurierbaren Zeitspanne besucht worden ist, und wobei das Inkrementieren des Besuchszählers, der mit der Netzwerkidentität verbunden ist, aufweist:
Inkrementieren der Anzahl der Besuche im gegenwärtigen Besuchsfenster, das mit der Netzwerkidentität verbunden ist, wobei der Besuchszähler, der mit der Netzwerkidentität verbunden ist, die Summe aller Besuche in allen seinen verbundenen Besuchsfenstern ist;
und durch Löschen der Anzahl der Besuche des ältesten der Besuchsfenster, wenn das gegenwärtige Besuchsfenster endet.

13. Modul nach Anspruch 12, wobei das Aktualisieren auf einem Ersetzungsalgorithmus beruht.

14. Modul nach Anspruch 12, wobei das Feststellen der Netzwerkidentität durch die Verwendung von Informationen aus einem DHCP-Server durchgeführt wird.

15. Modul nach Anspruch 12, wobei die netzwerkbezogenen Daten im Cachespeicher gemäß der Netzwerkidentität eines Netzwerks gespeichert werden.

16. Tragbare Vorrichtung (1), die zum Verwalten eines Cachespeichers (50) der tragbaren Vorrichtung (1) eingerichtet ist, wobei der Cachespeicher zum Speichern eines netzwerkbezogenen Dateninhalts verwendet wird, wobei die Vorrichtung Folgendes aufweist:
einen Cachespeicher (50) zum Cachespeichern eines netzwerkbezogenen Dateninhalts;
einen Detektor (17) zum Ermitteln eines Vorhandenseins von mindestens einem aktiven Netzwerk aus den mehreren aktiven Netzwerken, wobei der Detektor während einer Bewegung der tragbaren Vorrichtung (1) durch einen Bereich betrieben wird, der durch die mehreren aktiven Netzwerke durchsetzt ist, wobei es ermöglicht wird, dass die tragbare Vorrichtung (1) mit dem mindestens einen aktiven Netzwerk kommuniziert;
einen Verbinder (40, 66), um sich mit dem mindestens einen aktiven Netzwerk zu verbinden;
eine Komponente zum Feststellen einer Netzwerkidentität des mindestens einen aktiven Netzwerks;
eine Komponente zum Erhalten von Daten aus dem mindestens einen aktiven Netzwerk;
eine Zentraleinheit, CPU, (10) die mit dem Detektor (17), dem Verbinder (40, 66), der Komponente zum Feststellen, dem Cachespeicher (50) und der Komponente zum Erhalten und einem Modul (15) nach einem der Ansprüche 12-15 betriebsfähig verbunden ist.

17. Tragbare Vorrichtung (1) nach Anspruch 16, wobei die Vorrichtung (1) ferner eine drahtlose Datenschnittstelle aufweist, die zur Datenkommunikation mit dem mindestens einen Netzwerk eingerichtet ist.

18. Tragbare Vorrichtung (1) nach Anspruch 16, wobei die Vorrichtung (1) ferner ein Speichermodul (30) aufweist, das eingerichtet ist, Daten zu speichern.

19. Kommunikationssystem, das mindestens ein Netzwerk und mindestens eine tragbare Vorrichtung (1) nach einem der Ansprüche 16 bis 18 aufweist, wobei die tragbare Vorrichtung (1) zur Datenkommunikation mit dem mindestens einen Netzwerk eingerichtet ist.

20. Kommunikationssystem nach Anspruch 19, wobei die Datenkommunikation mindestens eine aus der Gruppe verwendet, die aus einer Bluetooth-Schnittstelle, einer UWB-Schnittstelle, einer WLAN-Schnittstelle und einer LAN-Schnittstelle besteht.

## Revendications

1. Un procédé de gestion d'une mémoire tampon (50) d'un dispositif portatif (1), dans lequel ladite mémoire tampon (50) est utilisée pour la conservation en mémoire d'un contenu de données relatif à un réseau, comprenant les opérations suivantes :
au cours du déplacement dudit dispositif portatif (1) au travers d'une zone occupée parmi une pluralité de réseaux actifs, la détection (S110) d'une existence d'au moins un réseau actif parmi ladite pluralité de réseaux, ledit dispositif portatif (1) étant autorisé à communiquer avec ledit au moins un réseau actif,
la détermination d'une identité de réseau dudit au moins un réseau actif,
l'actualisation dudit contenu de données relatif à un réseau sur la base de ladite identité de réseau et la conservation en mémoire d'au moins une partie dudit contenu de données relatif à un réseau actualisé dans ladite mémoire tampon si ladite identité de réseau n'est pas connue dudit dispositif portatif (1), et
l'incrémentation d'un décompte de visites associé à ladite identité de réseau si ladite identité de réseau est connue dudit dispositif portatif (1),
**caractérisé en ce que**
un nombre configurable de fenêtres de visite associées à chaque identité de réseau est fourni, une fenêtre de visite étant le nombre de fois qu'un réseau a été visité au cours d'une période de temps configurable, et ladite incrémentation dudit décompte de visites associé à ladite identité de réseau comprenant :
l'incrémentation du nombre de visites dans la fenêtre de visite en cours associée à ladite identité de réseau, le décompte de visites associé à ladite identité de réseau étant la somme de toutes les visites dans toutes ses fenêtres de visite associées, et par
la suppression du nombre de visites de la plus ancienne desdites fenêtres de visite si la fenêtre de visite en cours se termine.

2. Le procédé selon la revendication 1, dans lequel ladite actualisation est basée sur un algorithme de remplacement.

3. Le procédé selon la revendication 1, dans lequel chaque fois que ledit dispositif portatif (1) se connecte à un réseau donné parmi ladite pluralité de réseaux, ledit décompte de visites associé audit réseau donné est incrémenté si ledit réseau donné a été visité antérieurement.

4. Le procédé selon la revendication 1, dans lequel ladite détermination de ladite identité de réseau est exécutée au moyen d'informations provenant d'un serveur DHCP.

5. Le procédé selon la revendication 1, dans lequel ladite détermination de ladite identité de réseau est exécutée au moyen d'informations correspondant à une adresse de point d'accès au réseau, MAC.

6. Le procédé selon la revendication 1, dans lequel lesdites données relatives à un réseau sont conservées en mémoire dans la mémoire tampon selon ladite identité de réseau d'un réseau.

7. Un produit de programme informatique, contenant des sections de code de programme conservées en mémoire sur un support lisible par ordinateur destiné à effectuer des opérations lorsque ledit produit est exécuté sur un dispositif équipé d'un processeur, un dispositif de terminaison, un dispositif de réseau, un terminal portatif, un dispositif électronique grand public ou un terminal de communication mobile, lesdites opérations comprenant :
au cours du déplacement dudit dispositif portatif (1) au travers d'une zone occupée par une pluralité de réseaux actifs, la détection d'une existence d'au moins un réseau actif parmi ladite pluralité de réseaux, ledit dispositif portatif (1) étant autorisé à communiquer avec ledit au moins un réseau actif, la détermination d'une identité de réseau dudit au moins un réseau actif,
l'actualisation dudit contenu de données relatif à un réseau sur la base de ladite identité de réseau et la conservation en mémoire d'au moins une partie dudit contenu de données relatif à un réseau actualisé dans ladite mémoire tampon si ladite identité de réseau n'est pas connue dudit dispositif portatif (1), et
l'incrémentation d'un décompte de visites associé audit réseau si ladite identité de réseau est connue dudit dispositif portatif (1),
**caractérisé en ce que**
un nombre configurable de fenêtres de visite associées à chaque identité de réseau est fourni, une fenêtre de visite étant le nombre de fois qu'un réseau a été visité au cours d'une période de temps configurable,
et ladite incrémentation dudit décompte de visites associé à ladite identité de réseau comprenant :
l'incrémentation du nombre de visites dans la fenêtre de visite en cours associée à ladite identité de réseau, le décompte de visites associé à ladite identité de réseau étant la somme de toutes les visites dans toutes ses fenêtres de visite associées,
et par
la suppression du nombre de visites de la plus ancienne desdites fenêtres de visite si la fenêtre de visite en cours se termine.

8. Le produit de programme informatique selon la revendication 7, dans lequel ladite actualisation est basée sur un algorithme de remplacement.

9. Le produit de programme informatique selon la revendication 7, dans lequel chaque fois que ledit dispositif portatif (1) se connecte à un réseau donné parmi ladite pluralité de réseaux, ledit décompte de visites associé audit réseau donné est incrémenté si ledit réseau donné a été visité antérieurement.

10. Le produit de programme informatique selon la revendication 7, dans lequel ladite détermination de ladite identité de réseau est exécutée au moyen d'informations correspondant à une adresse MAC de routeur.

11. Le produit de programme informatique selon la revendication 7, dans lequel lesdites données relatives à un réseau sont conservées en mémoire dans la mémoire tampon selon ladite identité de réseau d'un réseau.

12. Un module de gestion d'une mémoire tampon d'un dispositif portatif (1), dans lequel ladite mémoire tampon est utilisée pour la conservation en mémoire d'un contenu de données relatif à un réseau, ledit module étant adapté pour
au cours du déplacement dudit dispositif portatif (1) au travers d'une zone occupée par une pluralité de réseaux actifs, la détection d'une existence d'au moins un réseau actif parmi ladite pluralité de réseaux dans lequel ledit dispositif portatif (1) est autorisé à communiquer avec ledit au moins un réseau actif,
la détermination d'une identité de réseau dudit au moins un réseau actif,
l'actualisation dudit contenu de données relatif à un réseau sur la base de ladite identité de réseau et la conservation en mémoire d'au moins une partie dudit contenu de données relatif à un réseau actualisé dans ladite mémoire tampon si ladite identité de réseau n'est pas connue dudit dispositif portatif (1), et l'incrémentation d'un décompte de visites associé audit réseau si ladite identité de réseau est connue dudit dispositif portatif (1),
**caractérisé en ce que**
un nombre configurable de fenêtres de visite associées à chaque identité de réseau est fourni, une fenêtre de visite étant le nombre de fois qu'un réseau a été visité au cours d'une période de temps configurable, et ladite incrémentation dudit décompte de visites associé à ladite identité de réseau comprenant :
l'incrémentation du nombre de visites dans la fenêtre de visite en cours associée à ladite identité de réseau, le décompte de visites associé à ladite identité de réseau étant la somme de toutes les visites dans toutes ses fenêtres de visite associées,
et par
la suppression du nombre de visites de la plus ancienne desdites fenêtres de visite si la fenêtre de visite en cours se termine.

13. Le module selon la revendication 12, dans lequel ladite actualisation est basée sur un algorithme de remplacement.

14. Le module selon la revendication 12, dans lequel ladite détermination de ladite identité de réseau est exécutée au moyen d'informations provenant d'un serveur DHCP.

15. Le module selon la revendication 12, dans lequel lesdites données relatives à un réseau sont conservées en mémoire dans la mémoire tampon selon ladite identité de réseau d'un réseau.

16. Un dispositif portatif (1) adapté à la gestion d'une mémoire tampon (50) dudit dispositif portatif (1), dans lequel ladite mémoire tampon est utilisée pour la conservation en mémoire d'un contenu de données relatif à un réseau, ledit dispositif comprenant :
une mémoire tampon (50) destinée à conserver en mémoire tampon un contenu de données relatif à un réseau,
un détecteur (17) destiné à la détection d'une existence d'au moins un réseau actif parmi une pluralité de réseaux actifs, ledit détecteur étant actionné au cours du déplacement dudit dispositif portatif (1) au travers d'une zone occupée par ladite pluralité de réseaux actifs, ledit dispositif portatif (1) étant autorisé à communiquer avec ledit au moins un réseau actif,
un connecteur (40, 66) destiné à connecter ledit au moins un réseau actif,
un composant destiné à la détermination d'une identité de réseau dudit au moins un réseau actif,
un composant destiné à l'obtention de données provenant dudit au moins un réseau actif,
une unité centrale de traitement, CPU, (10) qui est raccordée de manière opérationnelle audit détecteur (17), audit connecteur (40, 66), audit composant destiné à la détermination, à ladite mémoire tampon (50) et audit composant destiné à l'obtention et à un module (15) selon l'une quelconque des revendications 12 à 15.

17. Le dispositif portatif (1) selon la revendication 16, dans lequel ledit dispositif (1) comprend en outre une interface de données sans fil adaptée à une communication de données avec ledit au moins un réseau.

18. Le dispositif portatif (1) selon la revendication 16, dans lequel ledit dispositif (1) comprend en outre un module à mémoire (30) adapté de façon à conserver en mémoire des données.

19. Un système de communication comprenant au moins un réseau et au moins un dispositif portatif (1) selon l'une quelconque des revendications 16 à 18, dans lequel ledit dispositif portatif (1) est adapté à une communication de données avec ledit au moins un réseau.

20. Le système de communication selon la revendication 19, dans lequel ladite communication de données utilise au moins une interface du groupe se composant de interface Bluetooth, interface UWB, interface WLAN et interface LAN.
